# EUROPEAN PATENT SPECIFICATION

(11) **EP 3 530 525 B1**
(45) Date of publication and mention of the grant of the patent: **25.09.2024**
(21) Application number: 17873219.4
(22) Date of filing: 25.10.2017
(51) Int. Cl.: B60R 16/02, H01B 7/00, H01B 7/04, H01B 7/08

(54) **AUTOMOTIVE VEHICLE**
KRAFTFAHRZEUG
VÉHICULE AUTOMOBILE

(30) Priority: 22.11.2016 CN 201621267142 U
(43) Date of publication of application: 28.08.2019
(73) Proprietor: Jilin Zhong Ying High Technology Co., Ltd., Jilin 130000 (CN)
(72) Inventor: WANG, Chao, Changchun Jilin 130000 (CN)
(74) Representative: Bayramoglu et al.
(86) International application number: PCT/CN2017/107578
(87) International publication number: WO 2018/095178

(56) References cited:
- EP-A1- 0 507 225
- EP-A2- 1 701 362
- CN-A- 101 681 696
- CN-A- 102 822 908
- CN-A- 103 733 275
- CN-U- 206 217 803
- DE-A1- 102009 032 987
- DE-A1- 102014 011 180
- DE-A1- 102015 220 115
- DE-U1- 202015 103 854
- JP-A- 2013 093 144
- US-A1- 2007 066 101
- US-A1- 2012 261 185

## Description

### Technical field

The present invention relates to an automotive vehicle.

### Background

The existing automotive vehicles generally include a vehicle body shell, a plug, a power supply, and a power supply cable configured to connect the power supply and the plug. The plug and power supply are respectively located in the front end and the back end of the body shell of the vehicle. In the technical field of automotive vehicles, the commonly used power supply cables have a round cross section. Owing to the round cross section, the forces applied to different points of the same circumference are isotropous. As a result, it is hard to bend the cable because of a deformation difficulty under an action of an external force, thus the difficulty in installation is increased. Moreover, in order to avoid the occurrence of electricity leakage caused by a detachment of the power supply cable from the vehicle due to bumpiness or crashes during the movement, a number of fasteners are required to fix the power supply cable having round cross section on the vehicle body. Thus, in general, at every 5-9 cm interval along the length direction of the power supply cable, a fastener is required to fix the cable. In this case, not only the installation workload is increased, but also it is not favorable for lowering the installation cost.

Additionally, the existing power supply cable generally extend along the vehicle body shell. However, since there is no limit on the distance between the cable and the vehicle body shell in the installation of the existing power supply cable in a vehicle, there is a high tendency for cable wire abuse and waste, which is not favorable for lowering the installation cost. Moreover, once a large distance exists between the power supply cable and the vehicle body shell, the installation stability of the power supply cable will be greatly affected.

Since the conductive core of the existing power supply cable is made of copper which is expensive and heavy, it is not only unhelpful in lowering the material cost and transportation cost, but also cannot satisfy the requirements for pursuing the weight-reduced vehicle by people.

To this end, it's an imperative for an automotive vehicle having its power supply connected to an in-car plug or junction device in an easy and economical way. For such an automotive vehicle, it is not only required to reduce the probability of abusing the cable wires, ensure a reasonable use of the wires, and lower the installation cost, but also to effectively ensure the installation stability of the cables, degrade the installation difficulty of power supply cables, reduce the installation workload, lower the cable material cost and transportation cost, and satisfy the requirements for pursuing the weight-reduced vehicle by people.

Following documents show a conventional automotive vehicle comprising a cable:
D1: EP 0 507 225 A1 (Yazaki corp [JP]; Mazda Motor [JP]) 7 October 1992.
D2: DE 20 2015 103854 U1 (Bayerische Motoren Werke AG [DE]; Lisa Draxlmaier GMBH [DE]) 10 August 2015.
D3: DE 10 2009 032987 A1 (Eifelwerk Heinrich Stein GMBH & Co KG [DE] 27 January 2011.
D4: US 2012/261185 A1 (Murao Satoshi [JP] et al) 18 October 2012.
D5: EP 1 701 362 A2 (Gebauer & Griller [AT]) 13 September 2006.
D6: US 2007/066101 A1 (Suzuki Kaoru [JP]) 22 March 2007.
D7: DE 10 2015 220115 A1 (Draexlmaier Lisa GMBH [DE]) 20 April 2017.
D8: DE 10 2014 011180 A1 (Auto Kabel Man GMBH [DE]) 4 February 2016.

### Summary

It's therefore an objective of the present invention to provide an automotive vehicle to overcome the drawbacks in the prior art.

The automotive vehicle of the present invention is not only required to reduce the probability of abusing the cable wires, ensure a reasonable use of the wires, and lower the installation cost, but also to effectively ensure the installation stability of the cables, reduce the difficulty in installation of power supply cables, reduce the installation workload, lower the cable material cost and transportation cost, and satisfy the requirements for pursuing the weight-reduced vehicle by people.

To realize the above objectives, the present invention uses the following technical solutions.

An automotive vehicle includes a vehicle body shell, a power supply, and an in-car plug or junction device. The power supply is connected to the in-car plug or junction device partially or completely by flat cables. The flat cables extend along the vehicle body shell, and a distance between the flat cables and the vehicle body shell is less than or equal to 300mm. Each of the flat cables comprises a solid conductive core with a flat cross section and a flexible insulation layer wrapping over the solid conductive core. The solid conductive core is made of aluminium, and the solid aluminum conductive core has a ripple-shaped cross section.

Preferably, the flat cables are fixed on the vehicle body shell by a plurality of spaced-apart fasteners. An interval distance between two adjacent fasteners is 10-200 cm.

A flat cable for an automotive vehicle having a vehicle body shell, a power supply, and an in-car plug or junction device, wherein the flat cable connects the power supply to the in-car plug or junction device partially or completely, and the flat cable extends along the vehicle body shell, wherein each of the flat cables comprises a solid conductive core with a flat cross section and a flexible insulation layer wrapping over the solid conductive core and a distance between the flat cables and the vehicle body shell is less than or equal to 300mm; characterized in that the solid conductive core is made of aluminium, and the solid aluminum conductive core has a ripple-shaped cross section.

Compared with the prior art, the present invention has the following advantages. 1. According to the present invention, existing round cables of the automotive vehicles are partially or completely replaced with the flat cables. Owing to the flat cross section of the flat cable, the forces applied to the points on the flat cable are anisotropic, so the flat cables are easy to bend when being installed on the vehicle body shell, thereby greatly reducing the installation difficulty, simplifying the installation process, and reducing the installation workload.

2.The flat cable is installed at a location less than or equal to 300 mm from the vehicle body shell, which is a location relatively close to the profile of the vehicle body shell. By doing so, the probability that the flat cable waggles during the bumping of a vehicle because the flat cable is located far from the vehicle body shell can be effectively reduced, which can facilitate the improvement of the installation stability of the flat cables in vehicles. In the meantime, since the location is relatively closer to the vehicle body shell compared to other locations, there is only a small relative increase on the cable consumption in the wiring comparatively, so the material consumption in the cable installation can be reduced, the probability of abusing the cable wires can be reduced, a reasonable use of the cable wires can be ensured, and the installation cost can be reduced.

3. Extending the flat cable along the vehicle body shell is helpful in reducing the installation space of the flat cables in the vehicle body shell, so as to satisfy the requirement for simplifying the installation space by the people.

4. In terms of the flat cables, the existing copper core is replaced with a solid aluminum conductive core (wherein the solid aluminum conductive core may be an aluminum core or an aluminum alloy core). The density of aluminum is one third the density of copper. According to the electrical performances of aluminum and copper, i.e. the differences of electrical resistivity, on the basis that the conductivity performances are the same, the length to diameter ratio of aluminum is merely 1.28 times the length to diameter ratio of copper, while the weight of aluminum material is half the weight of copper material having the same current capacity. Thus, the weight of the cables can be greatly reduced, which is helpful in reducing the weight of the vehicle. By using the aluminum conductive core having lower specific weight and lower cost instead of copper conductive core having higher specific weight and higher cost, the material cost and transportation cost can be reduced, thereby reducing the production cost of the automotive vehicle and improving the performances of the vehicle.

5. Since the solid aluminum conductive core of the flat cable has a ripple-shaped cross section, the flat cables can be installed in a better fit with the profile of the vehicle body shell, which is favorable in reducing the installation space and installation cost.

6. The automotive vehicle of the present invention partially or completely uses the flat cables. Compared with the existing automotive vehicle which completely uses the power supply cables having round cross section, in the vehicle disclosed by the present invention, the installation stability of the flat cables installed in the vehicles body shell is better. Thus, when the flat cables are fixed on the vehicle body shell by several spaced-apart fasteners, the distance between two adjacent fasteners is merely 10 - 200 cm, i.e. at every 10 - 200 cm interval along the length direction of the flat cable, a fastener is provided. Compared with the use of power supply cables having round cross section of the same length, the use of the flat cable not only can firmly fix the flat cables on the vehicle body shell but also can greatly reduce the use amount of the fasteners, thereby remarkably reducing the installation workload and reducing the installation cost and production cost of the automotive vehicles.

The above description is merely a summarization of the technical solutions of the present invention. To clarify the technical solutions of the present invention, to allow the implementation of the technical solutions according to the recitation of the specification, and to clarify the above and other objectives, features, and advantages of the present invention, the preferred embodiments will be described hereinafter with reference to the drawings. The details are as below.

### Brief Description of the Drawings

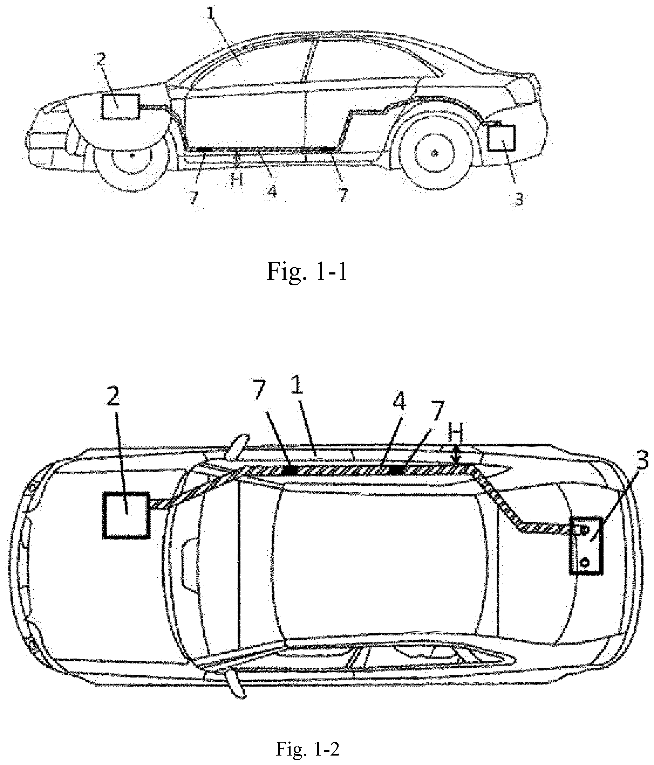

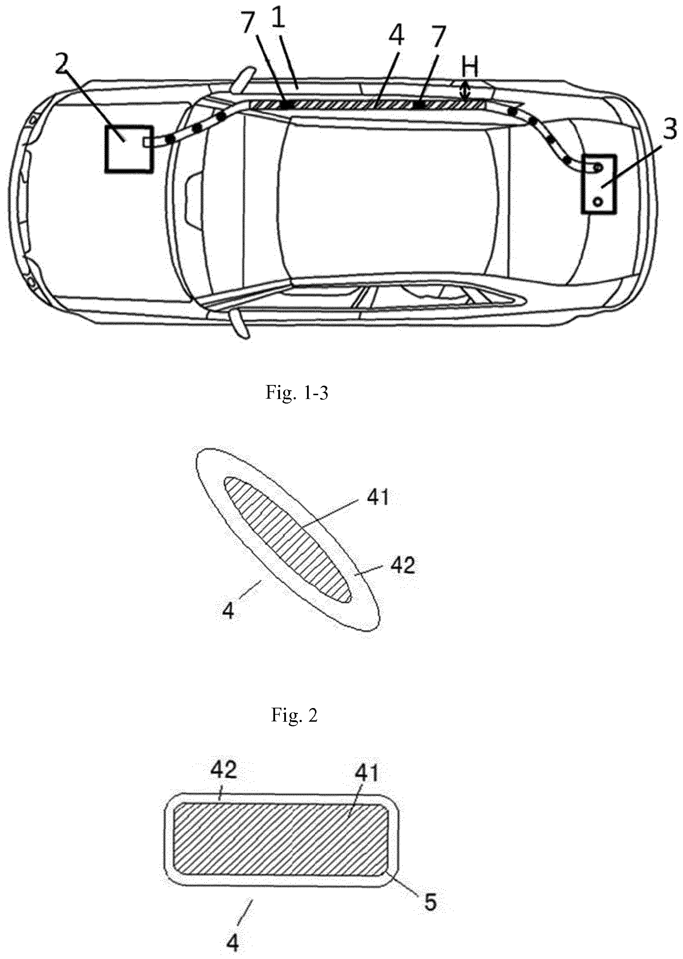

Fig. 1-1 is the first diagram showing the wiring structure of the automotive vehicle according to the present invention;
Fig. 1-2 is the second diagram showing the wiring structure of the automotive vehicle according to the present invention;
Fig. 1-3 is the third diagram showing the wiring structure of the automotive vehicle according to the present invention;
Fig. 2 is a structural diagram of a flat cable with the first type of cross section according to the present invention (not constituting a part of the present invention);
Fig. 3 is a structural diagram of a flat cable with the second type of cross section according to the present invention (not constituting a part of the present invention);
Fig. 4 is a structural diagram of a flat cable with the third type of cross section according to the present invention;
Fig. 5 is a structural diagram showing a flat cable of the present invention bent toward an X-axis (not constituting a part of the present invention);
Fig. 6 is a structural diagram showing a flat cable of the present invention bent toward a Y-axis (not constituting a part of the present invention);
Fig. 7 is a structural diagram showing a flat cable of the present invention bent toward a Z-axis (not constituting a part of the present invention);
Fig. 8 is a side perspective view of Fig 7 (not constituting a part of the present invention); and
Fig. 9 is a diagram showing a flat cable of the present invention successively bent toward a Y-axis and a Z-axis (not constituting a part of the present invention).

The reference designators in Figs. 1-9 are described below:
1. vehicle body shell; 2. plug; 3. power supply; 4. flat cable; 41. solid aluminum conductive core; 42. flexible insulation layer; 5. chamfer; 6a. bent portion; 6b. bent portion; 6c. bent portion; 6e. bent portion; 6f. bent portion; α. bending angle; β. bending angle; γ. bending angle; 7. fastener; H. the distance between the flat cable and the vehicle body shell.

### Detailed Description of the Embodiments

In order to further illustrate the technical solutions used in the present invention to realize the above-mentioned objectives and the functions thereof, the specific embodiments, structures, features, and functions of the present invention will be described in detail hereinafter with reference to the drawings and preferred embodiments. The details are as below.

Fig. 1-1 is the first diagram showing the wiring structure of the automotive vehicle according to the present invention. The automotive vehicle includes the vehicle body shell 1, the power supply 3, the in-car plug or junction device 2, and the flat cables 4 that partially or completely connect the power supply 3 and the plug or junction device 2. The plug 2 and the power supply 3 are respectively located at the front end and the back end of the vehicle body 1. The flat cables 4 extend along the vehicle body shell 1, and the distance H between the flat cables 4 and vehicle body shell 1 is less than or equal to 300mm.

According to the present invention, existing round cables of the automotive vehicles are replaced partially or completely with the flat cables 4. Owing to the flat cross section of the flat cable 4, the forces applied to the points on the flat cable are anisotropic, so the flat cables are easy to bend when being installed on the vehicle body shell 1, thereby greatly simplifying the installation process.

Moreover, the flat cable is installed at a location less than or equal to 300 mm from the vehicle body shell 1, which is a location relatively close to the profile of the vehicle body shell. By doing so, the probability that the flat cable waggles during the bumping of a vehicle because the flat cable is located far from the vehicle body shell 1 can be effectively reduced, which can facilitate the improvement of the installation stability of the flat cables in vehicles. In the meantime, since the location is relatively closer to the vehicle body shell 1 compared to other locations, there is only a relatively small increase on the cable consumption in the wiring comparatively, so the material consumption in the cable installation can be reduced, the probability of abusing the cable wires can be reduced, a reasonable use of the cable wires can be ensured, and the installation cost can be reduced. Moreover, extending the flat cable along the vehicle body shell 1 is helpful in reducing the installation space of the flat cables in the vehicle body shell 1, so as to satisfy the requirement for simplifying the installation space by the people.

As an improvement of the present embodiment, the flat cable 4 is fixed on the vehicle body shell 1 by several spaced-apart fasteners, and the interval between two adjacent fasteners 7 is 10 - 200 cm.

The automotive vehicle of the present invention partially or completely uses the flat cables 4. Compared with the existing automotive vehicle which completely uses the power supply cables having round cross section, in the vehicle disclosed by the present invention, the installation stability of the flat cables is better. Thus, when the flat cables 4 are fixed on the vehicle body shell 1 by several spaced-apart fasteners 7, the distance between two adjacent fasteners is merely 10 - 200 cm, i.e. at every 10 - 200 cm interval along the length direction of the flat cable 4, a fastener 7 is provided. Compared with the use of power supply cables having round cross section of the same length, the use of the flat cable not only can firmly fix the flat cables 4 on the vehicle body shell 1 to further improve the installation stability of the flat cable 4 on the vehicle body shell 1, but also can reduce the use amount of the fasteners 7, thereby remarkably reducing the installation workload and reducing the installation cost and production cost.

As an improvement of the present embodiment, the distance between the flat cable 4 and the vehicle body shell 1 is 2 - 100 mm. Within the value range, better effects can be obtained in the aspects of reducing the bending times of the flat cables 4, shortening the installation time, reducing the material consumption of the flat cables 4, and improving the installation stability of the flat cables 4 in the vehicle body shell 1.

Figs. 1-2 and 1-3 are the second and third diagrams showing the wiring structure of the automotive vehicle according to the present invention, and they are the top views of Fig. 1-1. Specifically, Fig. 1-2 is a structural diagram of an automotive vehicle which completely uses the flat cables for connections, and Fig. 1-3 is a structural diagram of an automotive vehicle which partially uses the flat cables for connections.

In order to reduce the cost of the automotive vehicle and the overall weight of the vehicle, and to facilitate the weight reduction of the vehicle, the flat cable 4 includes the flat-shaped solid aluminum conductive core 41 and the flexible insulation layer 42 wrapping over the solid aluminum conductive core 41.

In terms of the flat cable 4 of the present invention, the existing copper core is replaced with the solid aluminum conductive core 41 (wherein, in the present embodiment, the solid aluminum conductive core 41 may be an aluminum core or an aluminum alloy core). The density of aluminum is one third the density of copper. According to the electrical performances of aluminum and copper, i.e. the differences of electrical resistivity, on the basis that the conductivity performances are the same, the length to diameter ratio of aluminum is merely 1.28 times the length to diameter ratio of copper, while the weight of aluminum material is half the weight of copper material having the same current capacity. Thus, the weight of the lines can be greatly reduced, which is helpful in reducing the weight of the vehicle. By using the aluminum conductive core 41 having lower specific weight and lower cost instead of copper conductive core having higher specific weight and higher cost, the material cost and transportation cost can be reduced, thereby reducing the production cost of the automotive vehicle and satisfying the user's needs.

To recycle the power supply 3 and achieve the purpose of energy saving and make it environment friendly, the power supply 3 is a storage battery.

Besides the insulation performance, the insulation layer 42 is a waterproof layer, a certain degree of elasticity, abrasion resistance, and rigidity, so as to protect the insulation layer 42 in the subsequent processing and forming of the cable.

In order to protect the flexible insulation layer 42, as shown in Fig. 2, the solid aluminum conductive core 41 has an ellipse-shaped cross section which can prevent the solid aluminum conductive core 41 from piercing through the flexible insulation layer 42 (not constituting a part of the present invention).

In order to better fit with the profile of the vehicle body shell 1 in the wiring, the solid aluminum conductive core 41 may also be polygon-shaped, and the polygon shape may be a quadrilateral , a pentagon, a hexagon, or an octagon etc (not constituting a part of the present invention).

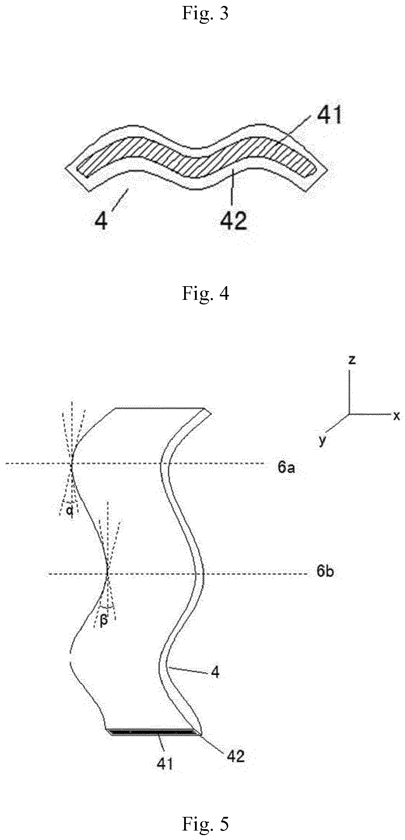

When the polygon shape is a quadrilateral shape, as a further improvement of the flat cable 4 as shown in Fig. 3, the quadrilateral shape is a rectangle. In order to ensure that people can bend the flat cable 4 according to the profile of the vehicle body shell 1 for wiring in the basis of satisfying the conductivity requirement of the flat cable 4, the rectangle has a height range of 2mm-4.5mm and a width range of 15mm-33mm. Further, in order to facilitate the processing and formation of the flat cable 4, preferably, the rectangle has a height range of 3.4mm-4.0mm and a width range of 29.7 mm-30.3 mm (not constituting a part of the present invention).

As shown in the Fig. 4, the solid aluminum conductive core has a ripple-shaped cross section, so that the flat cable 4 matches better with the profile of the vehicle body shell 1, and the installation space can be further reduced. Moreover, the flat cable composed of the solid aluminum conductive cores with the above-mentioned cross sectional shape has a wavy structure.

When the solid aluminum conductive core 41 has a polygonal cross section, taking the embodiment shown in Fig. 3 as an example, the corners of the polygon need to be processed to have fillets, so as to protect the flexible insulation layer 42. Namely, each corner of the polygon has a chamfer 5. By doing so, besides preventing the sharp edge from piercing through the flexible insulation layer 42, an electric discharge of burr due to an overcurrent and a breakdown can be avoided, thereby effectively protecting the flat cables 4 and prolonging the service life of the flat cables 4 (not constituting a part of the present invention).

Since the solid aluminum conductive cores 41 are more flexible than copper conductive cores, have a good bending performance, and allow a smaller bending radius, a bending forming is added to the design of the flat cable 4 in the present invention. The bent portions depend on the concave and convex pattern of the profile of the vehicle body shell, and the standard is to fit well with the vehicle body shell. The bending shape is formed in the below ways: with one end fixed, the other end is bent 0-180° along an arbitrary direction of an X-axis, a Y-axis, or a Z-axis in a three-dimensional coordinate system. The bent portion may have a certain radian, and/or be successively bent, or be wrapped over parts of automotive vehicle. In terms of the bending mode, it is not limited to be perpendicular to the edge of the flat cable 4, an angle with the edge of the cable is also acceptable. The forming method of the cable may be extrusion, wrapping over a fixed module, or twisting etc. A small scale of recovery is allowed without influencing the installation effect after the bending portion is shaped.

It should be noted that, the vehicle body shell in the present invention includes components such as chassis, frame shell, doors, and so on.

The bending performance of the flat cable 4 in the present invention are specifically described in three aspects below.

As shown in Fig. 5, when the flat cable is bent toward the X-axis, the upper end of the flat cable 4 is fixed, the bent portion is referred to as 6a and the bending angle is indicated as α in the drawing, and the bending direction is the positive X-axis in the drawing. The flat cable can be successively bent if necessary. Namely, the portion including the bending portion 6a is fixed, the bending is performed about another bending portion 6b. Besides the positive X-axis, the bending direction may be the negative X-axis, and the bending angle is indicated as β in the drawing. After all, a wavy flat cable 4 can be formed on the X-Z plane shown in the drawing.

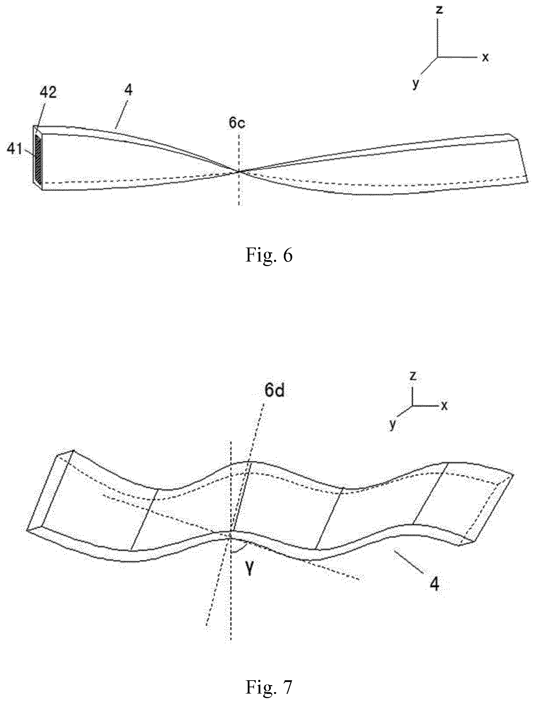

As shown in Fig. 6, when the flat cable 4 is twisted toward the X-axis in the drawing, the twisted portion is indicated as 6c in the drawing. With one end of the flat cable 4 fixed, the other end is twisted 180° about the X-axis. In this case, the upper and lower surfaces of the left and right sides are opposite. The flat surface of the flat cable 4 is located on the X-Z plane shown in the drawing. Here, the twisting angle not limited to 180°.

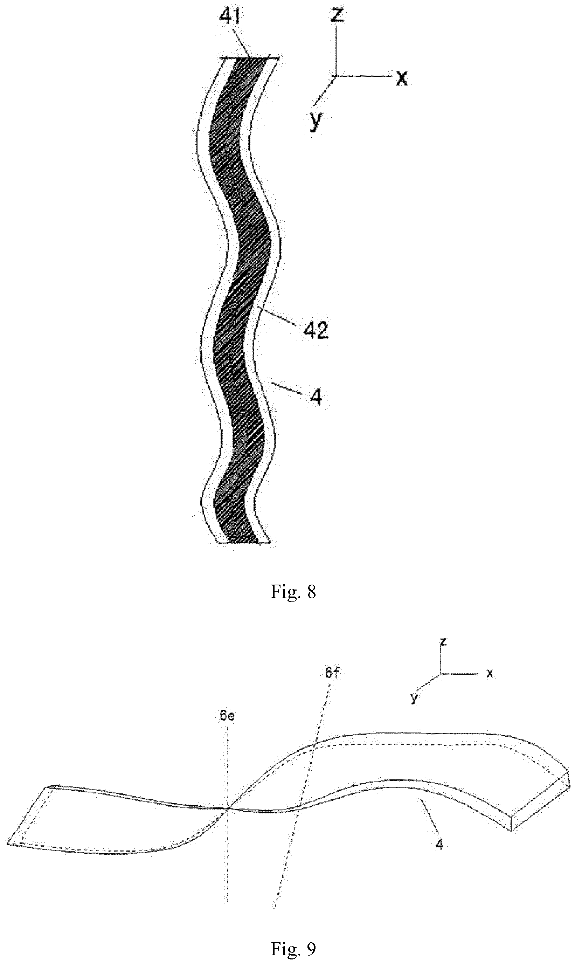

In the case where the flat cable 4 is bent toward the Z-axis, as shown in Fig. 7, the bending portion is indicated as 6d in the drawing. With one end of the flat cable 4 fixed, another end is bent toward the Z-axis with a bending angle which is indicated as γ to obtain the desired shape. If the cable is successively bent, the part including the bent portion should be fixed, and the other side is further bent to obtain the shape shown in Fig. 5. Fig.8 shows a side perspective view of the flat cable 4 which is bent toward the Z-axis with a certain angle.

It is not limited to bend the flat cable 4 successively in the same plane, the cable may also be bent successively toward different planes, so as to obtain more stereoscopic structure of the flat cable 4 to better fit with the vehicle body. As shown in Fig. 9, for one flat cable 4, the bent portion 6e is first twisted along the X-axis at a certain angle, and then the bent portion 6f is successively bent along the Z-axis at a certain angle to obtain the flat cable with a new shape.

The above-mentioned embodiments are merely preferred embodiments of the present invention, and it is improper to use these embodiments to limit the scope of the present invention. Any immaterial modifications and substitutions made by those skilled in the art based on the present invention should be considered as falling within the scope of the present invention.

## Claims

1. An automotive vehicle comprising a vehicle body shell (1), a power supply (3), and an in-car plug (2) or junction device, wherein the power supply (3) is connected to the in-car plug (2) or junction device partially or completely by flat cables (4), and the flat cables (4) extend along the vehicle body shell (1), wherein each of the flat cables (4) comprises a solid conductive core with a flat cross section and a flexible insulation layer (42) wrapping over the solid conductive core, and a distance (H) between the flat cables (4) and the vehicle body shell (1) is less than or equal to 300mm; **characterized in that** the solid conductive core is made of aluminium, and the solid aluminum conductive core (41) has a ripple-shaped cross section.

2. The automotive vehicle according to claim 1, **characterized in that** the flat cables (4) are fixed on the vehicle body shell (1) by a plurality of spaced-apart fasteners (7), and an interval distance between two adjacent fasteners (7) is 10-200cm.

3. A flat cable (4) for an automotive vehicle having a vehicle body shell (1), a power supply (3), and an in-car plug (2) or junction device, wherein the flat cable (4) connects the power supply (3) to the in-car plug (2) or junction device partially or completely, and the flat cable (4) extends along the vehicle body shell (1), wherein each of the flat cables (4) comprises a solid conductive core with a flat cross section and a flexible insulation layer (42) wrapping over the solid conductive core, and a distance (H) between the flat cables (4) and the vehicle body shell (1) is less than or equal to 300mm; **characterized in that** the solid conductive core is made of aluminium, and the solid aluminum conductive core (41) has a ripple-shaped cross section.

## Patentansprüche

1. Kraftfahrzeug, das eine Fahrzeugkarosserie (1), eine Stromversorgung (3) und einen eingebauten Steckverbinder (2) oder einer Verbindungsvorrichtung aufweist, wobei die Stromversorgung (3) mit dem eingebauten Steckverbinder (2) oder der Verbindungsvorrichtung teilweise oder vollständig durch Flachkabel (4) verbunden ist, und sich die Flachkabel (4) entlang der Fahrzeugkarosserie (1) erstrecken, wobei jedes der Flachkabel (4) einen massiven leitfähigen Kern mit einem flachen Querschnitt und einer flexiblen Isolationsschicht (42), die über den massiven leitfähigen Kern gewickelt ist, umfasst, und ein Abstand (H) zwischen den Flachkabeln (4) und der Fahrzeugkarosserie (1) kleiner oder gleich 300 mm ist; **dadurch gekennzeichnet, dass** der massive leitfähige Kern aus Aluminium hergestellt ist, und der massive leitfähige Aluminiumkern (41) einen wellenförmigen Querschnitt aufweist.

2. Kraftfahrzeug nach Anspruch 1, **dadurch gekennzeichnet, dass** die Flachkabel (4) an der Fahrzeugkarosserie (1) durch eine Vielzahl beabstandeter Befestigungselemente (7) befestigt sind und ein Zwischenabstand zwischen zwei angrenzenden Befestigungselementen (7) 10-200 cm beträgt.

3. Flachkabel (4) für ein Kraftfahrzeug, das eine Fahrzeugkarosserie (1), eine Stromversorgung (3) und einen eingebauten Steckverbinder (2) oder eine Verbindungsvorrichtung aufweist, wobei das Flachkabel (4) die Stromversorgung (3) teilweise oder vollständig mit dem eingebauten Steckverbinder (2) oder der Verbindungsvorrichtung verbindet, und sich das Flachkabel (4) entlang der Fahrzeugkarosserie (1) erstreckt, wobei jedes der Flachkabel (4) einen massiven leitfähigen Kern mit einem flachen Querschnitt und eine flexiblen Isolationsschicht (42), die über den massiven leitfähigen Kern gewickelt ist, umfasst, und ein Abstand (H) zwischen den Flachkabeln (4) und der Fahrzeugkarosserie (1) kleiner oder gleich 300 mm ist; **dadurch gekennzeichnet, dass** der massive leitfähige Kern aus Aluminium hergestellt ist, und der massive leitfähige Aluminiumkern (41) einen wellenförmigen Querschnitt aufweist.

## Revendications

1. Véhicule automobile comprenant une caisse de carrosserie de véhicule (1), une alimentation électrique (3) et un dispositif d'enfichage ou de jonction embarqué (2), dans lequel l'alimentation électrique (3) est reliée au dispositif d'enfichage ou de jonction embarqué (2) partiellement ou complètement par des câbles plats (4), et les câbles plats (4) s'étendent le long de la caisse de carrosserie de véhicule (1), dans lequel chacun des câbles plats (4) comprend un noyau conducteur solide avec une section transversale plate et une couche d'isolation flexible (42) enveloppant le noyau conducteur solide, et une distance (H) entre les câbles plats (4) et la caisse de carrosserie de véhicule (1) est inférieure ou égale à 300 mm ; **caractérisé en ce que** le noyau conducteur solide est en aluminium, et le noyau conducteur solide en aluminium (41) présente une section transversale ondulée.

2. Véhicule automobile selon la revendications 1, **caractérisé en ce que** les câbles plats (4) sont fixés sur la caisse de carrosserie de véhicule (1) par une pluralité d'attaches (7) espacés, et une distance d'intervalle entre deux attaches (7) adjacentes est de 10-200 cm.

3. Câble plat (4) pour véhicule automobile ayant une caisse de carrosserie de véhicule (1), une alimentation électrique (3) et un dispositif d'enfichage ou de jonction embarqué (2), dans lequel le câble plat (4) relie l'alimentation électrique (3) au dispositif d'enfichage ou de jonction embarqué (2) partiellement ou complètement, et les câbles plats (4) s'étendent le long de la caisse de carrosserie de véhicule (1), dans lequel chacun des câbles plats (4) comprend un noyau conducteur solide avec une section transversale plate et une couche d'isolation flexible (42) enveloppant le noyau conducteur solide, et une distance (H) entre les câbles plats (4) et la caisse de carrosserie de véhicule (1) est inférieure ou égale à 300 mm ; **caractérisé en ce que** le noyau conducteur solide est en aluminium, et le noyau conducteur solide en aluminium (41) présente une section transversale ondulée.
